# EUROPÄISCHE PATENTSCHRIFT

(11) **EP 4 026 398 B1**
(45) Veröffentlichungstag und Bekanntmachung des Hinweises auf die Patenterteilung: **23.08.2023**
(21) Anmeldenummer: 20761807.5
(22) Anmeldetag: 25.08.2020
(51) Int. Cl.: H05B 3/34, H05B 6/36

(54) **HEIZMATTE**
HEATING MAT
TAPIS CHAUFFANT

(30) Priorität: 06.09.2019 DE 102019123952
(43) Veröffentlichungstag der Anmeldung: 13.07.2022
(73) Patentinhaber: Deutsches Zentrum für Luft- und Raumfahrt e.V., 53227 Bonn (DE)
(72) Erfinder: KADEN, Markus, 70372 Stuttgart (DE); SCHNEIDER, Marvin, 71083 Herrenberg (DE)
(74) Vertreter: RPK Patentanwälte Reinhardt und Kaufmann Partnerschaft mbB
(86) Internationale Anmeldenummer: PCT/EP2020/073738
(87) Internationale Veröffentlichungsnummer: WO 2021/043634

(56) Entgegenhaltungen:
- WO-A1-02/074016
- DE-C1- 3 832 342
- DE-U1- 9 210 372
- JP-A- 2019 026 232
- US-A1- 2015 366 003

## Beschreibung

### Stand der Technik

Die Erfindung betrifft eine Heizmatte mit einem flächigen Träger und wenigstens einem Heizelement, das mit dem Träger verbunden ist.

Heizmatten werden beispielsweise zum Tempern und Beheizen von Reparaturstellen von Faserverbundwerkstoffen oder während der Herstellung von Faserverbund-Strukturen oder Composite-Bauteilen, im Folgenden auch Laminate genannt, verwendet. Die Heizmatten bestehen üblicherweise aus einem Draht, eingebettet in Trägermaterialien wie beispielsweise Silikon.

Aus der WO 02074016 A1 ist eine Heizmatte für eine Sitzheizung mit einem flächigen dehnbaren Träger mit wenigstens einem Heizelement bekannt. Das Heizelement ist als Widerstanddraht ausgeführt. Das Heizelement ist mit dem Träger durch Klebeelemente verbunden und zickzackförmig am Träger angeordnet. Durch den zickzackförmigen kann das Heizelement eine eindimensionale Dehnfähigkeit aufweisen.

Aus der DE 102017116931 A1 ist eine Reparaturvorrichtung bekannt, mit einer Reparaturmatte und mindestens einem Heizelement, welches an der Reparaturmatte angeordnet ist. In der Reparaturmatte ist dabei eine Mehrzahl von wärmeleitfähigen Partikeln vorgesehen, welche in die Reparaturmatte integriert sind. Dabei sind die Partikel innerhalb eines Strukturmaterials der Reparaturmatte beabstandet zueinander angeordnet. Die Reparaturmatte ist biegeflexibel ausgebildet. Das Heizelement ist beispielsweise an einer Seite des Strukturmaterials der Reparaturmatte angeordnet.

Das mindestens eine Heizelement steht insbesondere mit der Reparaturmatte in thermischem und/oder mechanischem Kontakt.

Die DE 102016115284 A1 beschreibt eine Reparaturvorrichtung an einem Werkstück aus einem Kunststoffmaterial, umfassend eine Induktionsheizvorrichtung, welche an dem Werkstück angeordnet ist, und ein Reparaturmaterial, welches an einem Reparaturbereich des Werkstücks angeordnet ist.

Dabei umfasst die Induktionsheizvorrichtung eine Magnetfelderzeugungseinrichtung und eine Wärmequelle. Die Wärmequelle ist zwischen der Magnetfelderzeugungseinrichtung und dem Reparaturbereich angeordnet. Die Reparaturvorrichtung weist mindestens einen Temperatursensor auf, durch welche eine Wärmebeaufschlagung des Reparaturmaterials durch die Wärmequelle charakterisiert wird. Der mindestens eine Temperatursensor ist signalwirksam mit einer Steuer- und/oder Regeleinrichtung verbunden ist. Die Steuer- und/oder Regeleinrichtung weist eine Speichereinrichtung auf, in der eine Temperaturverlaufsvorgabe gespeichert ist. Die Steuer- und/oder Regeleinrichtung steuert und/oder regelt die durch den mindestens einen Temperatursensor gemessene Temperatur gemäß der gespeicherten Tem peraturverlaufsvorgabe.

Die DE 69636952 T2 offenbart ein flexible isoliertes Heizelement, das zum Erwärmen um Rohre oder andere ungewöhnlich geformte Komponenten umgelegt wird. Das Heizelement umfasst eine relativ dünne und elastische, nicht dehnbare Heizmatte, die entweder eine zweidimensionale Krümmung, wie sie z.B. Rohre oder andere Rohrleitungen aufweist, oder dreidimensionale Krümmungen, wie z.B. Sphären, Sättel, Ventilkörper, Ellbogenfittings oder T-Fittings besitzen, aufweist.

Die DE 10243448 B4 ein flexibles Heizelement, wie eine Wärmedecke, Wärmekissen oder Wärmeunterbett, mit einer in dem Heizelement verlegten Heizkordel, die über einen außerhalb des Heizelements herausgeführten Heizkordelabschnitt und einen elektrischen Beschaltungsteil mit einer elektrischen Zuleitung verbunden ist und mit ihrem anderen Ende ihrer Heizdrähte in dem Heizelement endet. Der herausgeführte Heizkordelabschnitt ist mit einer auf der äußeren Isolation der Heizkordel aufgebrachten wärmeisolierenden, flexiblen Umhüllung versehen, die in ihrem Übergangsbereich zu dem Heizelement und/oder in ihrem weiteren Übergangsbereich zu dem Beschaltungsteil mit einem Knickschutz- oder Zugentlastungsteil versehen.

Die WO 99/60823 A1 offenbart ein elektrisches Heizelement mit einer als elektrische Widerstandsheizung ausgebildeten Heizschicht, wobei die Heizschicht aus elektrisch leitenden nichtmetallischen Fasern gebildet ist, die in eine aus Kunststoff hergestellte Schicht eingebettet sind. Die elektrisch leitenden nichtmetallischen Fasern sind als Vlies ausgebildet. Das elektrische Heizelement ist bei der Verwendung Epoxidharz oder Polyesterharz zur Herstellung der Kunststoffschicht mehr oder weniger steif und rigide und kann entsprechend einer gewünschten dreidimensionalen Form ausgebildet sein, während es bei der Verwendung von Silikonharz zur Herstellung der Kunststoffschicht flexibel und verformbar bleibt. Das elektrische Heizelement mit einer aus Silikonharz gebildeten Kunststoffschicht findet Anwendung als Heizung für Autositze, Liegen, Betten, für Heizdecken und Wärmedecken, sowie allgemein für Bekleidung.

Die DE 202008011596 U1 offenbart ein Heizelement mit einem Verbundaufbau, mit einem außenliegenden leitenden Bereich mit einer innenliegenden ersten Isolierung und einem darin eingebetteten Heizleiter und einer innenliegenden zweiten Isolierung.

Der leitende Bereich umgibt die erste Isolierung und die zweite Isolierung entlang eines leitenden Pfades vollständig, wobei der leitende Bereich einen Auslösestrom zur Auslösung einer Sensorfunktion leitet. Die geometrische Form des Aufbaus des Heizelementes kann gegebenenfalls je nach Anwendung unterschiedlich ausgeführt sein, beispielsweise als eine Heizfläche, wie z.B. als ein flächiges Band, eine flächige Matte o. a., beispielsweise flexible Heizmatten zur Vulkanisierung im Reifenbereich oder flexible Heizbänder als Rohrbegleitheizungen.

Die DE 60132943 T2 offenbart ein Heizkissen mit einer Mischung aus einer homogenen Paste aus einem thermisch leitfähigen Partikelfeststoff und einer Flüssigmetalllegierung in einem fließfähigen Kunstharzmaterial. Die Oberflächen des thermisch leitfähigen Partikelfeststoffs werden mit der flüssigen Metalllegierung benetzt, wobei die Flüssigmetalllegierung die einzelnen Partikel einkapselt, die den thermisch leitfähigen Partikelfeststoff ausbilden.

Die US 2014/0317925 A1 offenbart eine heizbare Reparaturmatte zur Reparatur eines Flügels einer Windkraftanlage, beispielsweise aus einem Faserverbundwerkstoff. Ein Heizdraht ist in ein elastisches Trägermaterial der Reparaturmatte eingebettet.

Die DE 102016209487 A1 offenbart eine Vakuumhaube mit einer Induktionsheizvorrichtung zur Reparatur von Verbundwerkstücken, bei der eine Spuleneinrichtung mittels Haltefäden auf einem textilen Träger mit Faserstruktur und/oder Maschenstruktur fixiert ist. Der Träger ist mit der Spuleneinrichtung in die Vakuumhaube aus Silikon eingebettet und biegeflexibel ausgebildet. Zur Verstärkung kann an oder in der Vakuumhaube eine Verstärkungsstruktur vorgesehen sein.

### Offenbarung der Erfindung

Die Aufgabe der Erfindung ist es, eine Heizmatte mit einem flächigen Träger und wenigstens einem Heizelement zu schaffen, welche an gekrümmte Formen angelegt werden kann und kostengünstig zu fertigen ist.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Die Erfindung geht aus von einer Heizmatte mit einem flächigen Träger und wenigstens einem Heizelement aus einem drahtförmigen oder faserförmigen Element, das mit dem Träger verbunden ist. Der Träger weist wenigstens einen Bereich mit dem wenigstens einen Heizelement auf, in dem das wenigstens eine Heizelement entlang seiner Länge von einem geradlinigen Verlauf abweichende Richtungswechsel auf dem Träger aufweist.

Es wird vorgeschlagen, dass der Träger mit einer Reißdehnung in wenigstens einer Richtung von mindestens 50% reversibel dehnbar ausgebildet ist. Das wenigstens eine Heizelement ist auf den Träger aufgestickt oder aufgenäht und weist eine wenigstens zweidimensionale Dehnfähigkeit auf und folgt der Dehnung des Trägers reversibel.

Hierbei ist das wenigstens eine Heizelement auf dem Träger durch Schlaufen gehalten oder wenigstens zeitweise durch Schlaufen gehalten. Dabei kann das Heizelement beispielweise mit einem Faden aus wenigstens einem von Polyester, Aramid, Polyamid, Glasfaser auf den Träger aufgestickt sein. Der Träger kann wiederum aus Silikon oder alternativ aus einem gewebten Material bestehen. Dann kann in einem Zweikomponenten (2K)-Verfahren Silikon darauf gegossen werden, sodass das Heizelement in einer 2K-Silikonmatte eingebettet ist. Danach können die Fäden, mit denen das Heizelement gehalten wurde, auch wieder entfernt werden.

Der Stickvorgang kann maschinell erfolgen, wobei das Stickmuster auf einem Computer erstellt werden kann. Auf diese Weise ist eine sehr kostengünstige Herstellung der Heizmatte möglich.

Das drahtförmige oder faserförmige Element kann ein Metalldraht sein oder auch eine elektrisch leitfähige, nichtmetallische Faser, beispielsweise eine Kohlefaser.

Bei der erfindungsgemäßen Heizmatte wird ein langgestrecktes Heizelement aus einem drahtförmigen oder faserförmigen Element für eine Widerstandsheizung oder eine Induktionsheizung direkt auf ein elastisches Medium als Träger aufgebracht und beispielsweise in hin und her gehenden Schlaufen oder Bögen auf der Oberfläche des Trägers verlegt und/oder steht von der Oberfläche des Trägers ab. Das Heizelement weist dadurch eine Dehnungsreserve auf, da seine Länge auf eine gerade Richtung auf dem nicht gedehnten Träger projiziert kleiner ist als seine Gesamtlänge. Wird der Träger gedehnt, wenn dieser beispielsweise auf eine gekrümmte Oberfläche eines Bauteils aufgelegt wird, folgt das Heizelement einer Dehnung des Trägers in dem Bereich flexibel , indem das Heizelement beispielsweise gestreckt wird und dabei seine Dehnungsreserve aufbraucht. Das Heizelement ist auf den Träger aufgestickt oder aufgenäht. Der Stickvorgang kann maschinell erfolgen, wobei das Stickmuster auf einem Computer erstellt werden kann. Auf diese Weise ist eine sehr kostengünstige Herstellung der Heizmatte möglich. Das Trägermaterial kann beispielsweise eine Silikonmatte oder Silikonkautschuk sein.

Das Heizelement kann so an einem geraden Bereich des Trägers angeordnet sein und entlang seiner Erstreckung eine größere Länge aufweisen als der gerade Bereich des Trägers in entspanntem Zustand des Trägers aufweist. Eine entsprechende Dehnungsreserve des Heizelements beträgt mindestens 10%, vorzugsweise mindestens 20%, d.h. die Gesamtlänge des Heizelements ist mindestens 10% größer als seine auf eine gerade Richtung auf dem nicht gedehnten Träger projizierte Länge.

Auf diese Weise kann eine zweifach gekrümmte Oberfläche mit der Heizmatte abgebildet werden, was einen signifikanten Vorteil gegenüber dem Stand der Technik darstellt, bei dem als Trägermaterial üblicherweise ein textiles Gebilde aus mehreren Fäden in Kett- und Schussrichtung verwendet wird.

Einem solchen textilen Gebilde fehlt die Elastizität in der Ebene des textilen Gebildes. Bekannte zweifach gekrümmte Heizmatten müssen bisher bei der Herstellung aufwändig an die zu erwärmende Form angepasst werden und sind für andere Formen praktisch nicht nutzbar.

Die erfindungsgemäße Heizmatte weist dagegen so viel Elastizität auf, dass die Heizmatte an mehrfach gekrümmte Oberflächen angelegt werden kann, um beispielsweise Reparaturverfahren an Faserverbundstrukturen durchzuführen, indem aufgelegt Reparaturstücke wie Laminate aufgeheizt und mit der Faserverbundstruktur gefügt werden.

Auch lassen sich mit einer solchen Heizmatte Laminate auf komplex geformten Werkzeugen auf geeignete Weise aufheizen. Dadurch können effiziente Herstellverfahren für Laminate darstellen, die nicht in Autoklaven ablaufen müssen.

Gemäß einer vorteilhaften Ausgestaltung der Heizmatte kann das wenigstens eine Heizelement in dem Bereich wenigstens bereichsweise Richtungsumkehr-Strukturen aufweisen, die sich parallel zu einer Oberfläche des Trägers erstrecken und/oder dass wenigstens bereichsweise Richtungsumkehr-Strukturen von der Oberfläche des Trägers abstehen. Der Bereich kann zweidimensional flächig auf der Oberfläche des Trägers ausgebildet sein, wenn Richtungsumkehr-Strukturen parallel zur Oberfläche des Trägers sich erstrecken. Wenn die Richtungsumkehr-Strukturen jedoch von der Oberfläche des Trägers abstehen, kann der Bereich sogar dreidimensional ausgebildet sein.

Die Richtungsumkehr-Strukturen können beispielsweise Bögen, Wellen, Schleifen und/oder Knicke sein, wodurch Heizdrähte des Heizelements in größerer Länge auf einem geraden und/oder ebenen Träger angeordnet werden können.

Bei einer Krümmung oder Biegung der Heizmatte wird dann die Dehnungsreserve des Heizelements günstig ausgenutzt, um die Heizmatte an eine mehrfach gekrümmte Oberfläche einer Reparaturstruktur oder an ein komplex geformtes Werkzeug anzulegen.

Gemäß einer vorteilhaften Ausgestaltung der Heizmatte kann der Träger eine Shore-Härte von 5 bis 60 Shore, insbesondere von 10 bis 40 Shore, bevorzugt von 20 bis 30 Shore, aufweisen. Die Shore-Härte wird dabei nach DIN 53505 aus dem Jahr 2000 definiert. Diese Shore-Härtewerte sind für Silikon typische Werte.

Gemäß einer vorteilhaften Ausgestaltung der Heizmatte kann der Träger einen Weiterreißwiderstand von 4 bis 100 N/mm, insbesondere von 15 bis 100 N/mm, besonders bevorzugt von 25 bis 100 N/mm aufweisen. Die Weiterreißwiderstandswerte können nach ASTM D 624 B aus dem Jahr 2000 in einer Streifenprobe und nach DIN 53515 mit einer Winkelprobe bestimmt werden.

Gemäß einer vorteilhaften Ausgestaltung der Heizmatte kann der Träger in der wenigstens einer Richtung eine Reißdehnung im Bereich von 100% bis 800%, bevorzugt im Bereich von 200% bis 800%, besonders bevorzugt im Bereich von 500% bis 800%, jeweils gemessen mit DIN 53504, S3A aus dem Jahr 2017 Die Reißdehnung wird in % relativ zur Ausgangslänge vor der Dehnung angegeben. Bei Standardelastomeren liegt die Reißdehnung zwischen 100 und 800 %. In Einzelfällen bei Spezial-Compounds kann dieser Wert auch deutlich überschritten werden.

Gemäß einer vorteilhaften Ausgestaltung der Heizmatte kann wenigstens ein Sensorelement auf dem Träger befestigt sein, insbesondere mittels Schlaufen befestigt sein. Das Sensorelement kann beispielsweise ein Temperaturelement wie ein Widerstandstemperatursensor oder ein Thermoelement sein, der zweckmäßigerweise auch in den Träger gestickt werden kann. Auf dies Weise kann das Sensorelement dauerhaft auf der Heizmatte befestigt sein und die Temperatur der Heizmatte und/oder des Heizelements zuverlässig messen.

Gemäß einer vorteilhaften Ausgestaltung der Heizmatte kann der Träger aus Silikon, vorzugsweise aus 2K-Silikon gebildet sein und/oder aus einem gewebten Material gebildet sein.

Das gewebte Material kann aus einem elastischen Material oder ebenfalls so gewebt oder gestickt mit einer anderen Textiltechnologie hergestellt sein, dass auch das Trägermaterial ähnlich wie drahtförmigen oder faserförmigen Element Schlaufen oder Muster aufweist, welche sich bei Belastung ebenfalls elastisch verformen lassen.

Das Heizelement kann beispielweise mit einem Faden aus wenigstens einem von Polyester, Aramid, Polyamid, Glasfaser, auf den Träger aufgestickt sein.

Der Träger kann wiederum aus Silikon oder alternativ aus einem gewebten Material bestehen. Dann kann in einem Zweikomponenten (2K)-Verfahren Silikon darauf gegossen werden, sodass das Heizelement in einer 2K-Silikonmatte eingebettet ist. Danach können die Fäden, mit denen das Heizelement gehalten wurde, auch wieder entfernt werden. Der Stickvorgang kann maschinell erfolgen, wobei das Stickmuster auf einem Computer erstellt wird. Auf diese Weise ist eine sehr kostengünstige Herstellung der Heizmatte möglich.

Gemäß einer vorteilhaften Ausgestaltung der Heizmatte kann das wenigstens eine Heizelement als Widerstandsheizung ausgebildet sein. Auf diese Weise kann ein Laminat oder Reparaturstück durch die aufgelegte Heizmatte direkt aufgeheizt werden. Dadurch lässt sich eine homogene Temperaturverteilung erreichen.

Gemäß einer vorteilhaften Ausgestaltung der Heizmatte kann das wenigstens eine Heizelement als Induktionsheizung ausgebildet sein. Dabei werden zweckmäßig Spulen mit gleichem Wicklungssinn als Heizelement von elektrischem Wechselstrom durchflossen. Es wird so ein räumlich möglichst homogenes Magnetfeld erzeugt, welches in einer darunterliegenden elektrisch leitenden, beispielsweise metallischen, Schicht durch Induktion wiederum Wirbelströme erzeugt. Statt einer metallischen Schicht können auch Carbon-Nanoröhrchen oder Kohlefasern induktiv aufgeheizt werden.

Diese Wirbelströme erwärmen die metallische Schicht auf Grund ihrer sogenannten Wirbelstromverluste. Wird die metallische Schicht in unmittelbarer Umgebung des zu erwärmenden Objekts, beispielsweise eines Laminats oder Reparaturstücks einer Faserverbundstruktur, angeordnet, kann das Objekt dadurch wirksam aufgeheizt werden. Gemäß einer vorteilhaften Ausgestaltung der Heizmatte kann am Rand des Trägers wenigstens bereichsweise ein Vakuumkanal angeordnet sein. Der Vakuumkanal kann zweckmäßig rundumlaufend ausgebildet sein. Wird die Heizmatte an ein Werkstück angelegt und der Vakuumkanal evakuiert, dann wird die Heizmatte an die Oberfläche des Werkstücks angesaugt und nimmt die Form des Werkstücks an. Gleichzeitig wird die Heizmatte in ihrer Position festgehalten. Damit kann der Aufheizvorgang des Werkstücks effizient und zuverlässig durchgeführt werden.

Gemäß einer vorteilhaften Ausgestaltung der Heizmatte kann das wenigstens eine Heizelement mit einer flexiblen Masse abgedeckt sein. Die flexible Masse kann beispielsweise Silikon sein, jedoch sind auch andere Kunststoffe, welche eine genügende Elastizität und Temperaturbeständigkeit aufweisen einsetzbar. Auf diese Weise wird das Heizelement in der Heizmatte eingebettet und ist so auch mechanisch geschützt gegen mögliche Beschädigungen. Auch eine zuverlässige elektrische Isolation lässt sich mit einer solchen Anordnung erreichen.

Gemäß einer vorteilhaften Ausgestaltung der Heizmatte kann das wenigstens eine Heizelement aus einer Litze gebildet sein. Die Litze kann aus einer Vielzahl von Einzeldrähten bestehen. Typische Litzen zur Induktionserwärmung können beispielsweise in der Größenordnung von mehreren Hundert, beispielsweise 500 Einzeldrähten umfassen. Solche Litzen weisen eine große Flexibilität auf, wodurch sie für das Verlegen der Heizdrähte in Kurven, Bögen, Knicken oder Schleifen besonders geeignet sind. Für Widerstandsheizungen sind auch Litzen mit einer geringeren Zahl an Einzeldrähten möglich, beispielsweise 10 Einzeldrähte.

Gemäß einer vorteilhaften Ausgestaltung der Heizmatte kann der Träger und/oder die flexible Masse wenigstens ein Kühlelement aufweisen.

Ein solches Kühlelement kann in der Heizmatte entstehende Wärme, beispielsweise durch die stromdurchflossenen Heizdrähte einer induktiven Heizung, oder durch Wärmeleitung aus dem Werkstück wirksam abführen. Auf diese Weise kann die Temperatur der Heizmatte selbst in einem günstigen Bereich gehalten werden. Für die Verarbeitung von Laminaten können beispielsweise Temperaturen von bis zu 400°C nötig sein, während der Silikonträger der Heizmatte bei Temperaturen oberhalb von 200°C Degradationserscheinungen entwickeln kann. Mit einem solchen Kühlelement kann die Temperatur der Heizmatte geeignet abgesenkt werden.

Gemäß einer vorteilhaften Ausgestaltung der Heizmatte kann das wenigstens eine Kühlelement wenigstens eine Kühlleitung aufweisen, welche von einem Fluid, insbesondere Luft, durchströmt ist. Kühlleitungen, welche auf dem Träger verlegt sind, können wirksam Wärme abführen, wenn sie von Luft durchströmt sind. Alternativ ist auch möglich, Fluide wie beispielsweise Wasser als Kühlmedium zu verwenden. Auf diese Weise lässt sich eine wirksame und kostengünstige Kühlung der Heizmatte erreichen. Auch kann mittels eines solchen Kühlelements die Temperatur in einem für den Anwendungsfall günstigen Temperaturbereich regeln.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: einen Schnitt durch eine Heizmatte mit einem auf einem Träger angeordneten Heizelement nach einem ersten Ausführungsbeispiel der Erfindung;
- Fig. 2: einen Schnitt durch eine Heizmatte mit einem auf einem Träger angeordneten Heizelement nach einem weiteren Ausführungsbeispiel der Erfindung, wobei das Heizelement mit einer flexiblen Masse abgedeckt ist;
- Fig. 3: einen Schnitt durch eine Heizmatte mit einem auf einem Träger angeordneten Heizelement nach einem weiteren Ausführungsbeispiel der Erfindung, wobei der Träger einen umlaufenden Vakuumkanal aufweist;
- Fig. 4: einen Schnitt durch eine Heizmatte mit einem auf einem Träger angeordneten Heizelement nach einem weiteren Ausführungsbeispiel der Erfindung, bei dem das Heizelement auf den Träger aufgestickt und durch Schlaufen des Nähfadens gehalten ist;
- Fig. 5: einen Schnitt durch eine Heizmatte mit einem auf einem Träger angeordneten Heizelement nach einem weiteren Ausführungsbeispiel der Erfindung, bei dem das Heizelement in Bögen von der Oberfläche des Trägers absteht;
- Fig. 6: eine schematische Draufsicht auf einen Träger mit mehreren parallelen, in Wellenlinien angeordneten Heizelementen nach einem ersten Ausführungsbeispiel der Erfindung;
- Fig. 7: eine schematische Draufsicht auf einen Träger mit mehreren parallelen, in Wellenlinien angeordneten und sich kreuzenden Heizelementen nach einem weiteren Ausführungsbeispiel der Erfindung;
- Fig. 8: eine schematische Draufsicht auf einen Träger mit einem in Zick-Zack-Linien ausgebildeten Heizelement nach einem weiteren Ausführungsbeispiel der Erfindung;
- Fig. 9: eine schematische Draufsicht auf einen Träger mit einem als Spule mäanderförmig ausgebildetem Heizelement nach einem weiteren Ausführungsbeispiel der Erfindung;
- Fig. 10: eine vergrößerte Darstellung des Heizelements nach Fig. 9;
- Fig. 11: eine schematische Draufsicht auf einen Träger mit einem wellenlinienartig ausgebildeten Heizelement nach einem weiteren Ausführungsbeispiel der Erfindung;
- Fig. 12: eine vergrößerte Darstellung des Heizelements nach Fig. 11;
- Fig. 13: einen Schnitt durch eine Heizmatte mit einem auf einem Träger angeordneten Heizelement nach einem weiteren Ausführungsbeispiel der Erfindung, wobei auf dem Träger ein Kühlelement angeordnet ist;
- Fig. 14: einen Schnitt durch eine Heizmatte mit einem auf einem Träger angeordneten Heizelement und einem Kühlelement nach einem weiteren Ausführungsbeispiel der Erfindung, wobei das Heizelement und das Kühlelement mit einer flexiblen Masse abgedeckt sein;
- Fig. 15: einen Schnitt durch eine Heizmatte mit einem auf einem Träger angeordneten Heizelement und einem Kühlelement nach einem weiteren Ausführungsbeispiel der Erfindung, wobei der Träger einen umlaufenden Vakuumkanal aufweist.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

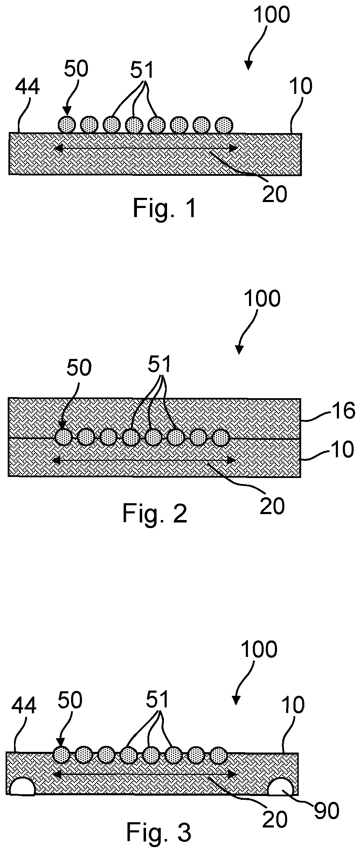

Figur 1 zeigt einen Schnitt durch eine Heizmatte 100 mit einem auf einem Träger 10 angeordneten Heizelement 50 nach einem ersten Ausführungsbeispiel der Erfindung.

Die Heizmatte 100 weist einen flächigen Träger 10 und wenigstens ein Heizelement 50 aus einem Draht 51 auf, das mit dem Träger 10 verbunden ist. Es versteht sich, dass statt eines Drahts 51 auch eine elektrisch leitfähige Faser eingesetzt werden kann.

Das Heizelement 50 ist bei diesem Ausführungsbeispiel auf der Oberfläche 44 des Trägers 10 angeordnet. Von dem Heizelement 50 sind im Schnitt eine Vielzahl von Drähten 51 zu erkennen, von denen aus Gründen der Übersichtlichkeit nur drei mit dem Bezugszeichen 51 bezeichnet sind. Die Drähte 51 können als einzelne Drähte ausgebildet sein. Sie können jedoch vor und/oder hinter der Schnittebene auch miteinander verbunden sein.

Der Träger 10 ist reversibel dehnbar ausgebildet und weist wenigstens einen Bereich 20 mit dem wenigstens einen Heizelement 50 auf, in dem das wenigstens eine Heizelement 50 entlang seiner Länge von einem geradlinigen Verlauf abweichende Richtungswechsel auf dem Träger 10 aufweist.

Das Heizelement 50 kann so an dem geraden Bereich 20 des Trägers 10 angeordnet sein und entlang seiner Erstreckung eine größere Länge aufweisen als der gerade Bereich 20 des Trägers 10 in entspanntem Zustand des Trägers 10 aufweist. Eine entsprechende Dehnungsreserve des Heizelements 50 kann dabei typischerweise mindestens 10%, vorzugsweise mindestens 20%, seiner auf eine gerade Richtung auf dem nicht gedehnten Träger 50 projizierten Länge betragen.

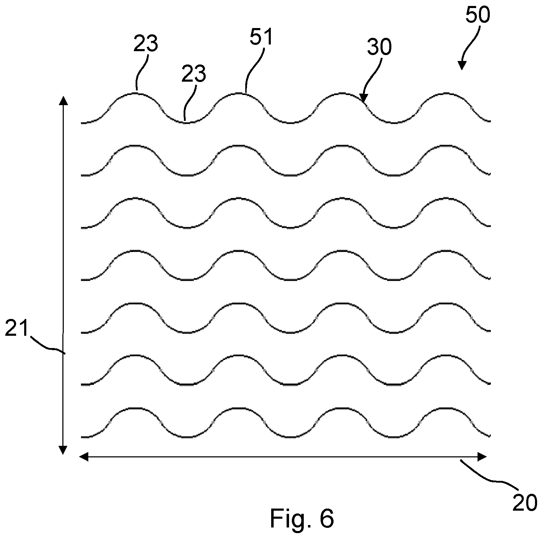

Die Länge des Heizelements 50 ist beispielsweise in Figur 6 mit dem Bezugszeichen 30 bezeichnet und stellt die physikalische Länge des Heizelements 50 von seinem Anfang bis zu seinem Ende dar, die gemessen werden kann, wenn das gekrümmte Heizelement 50 über seine Länge gerade ausgezogen wird.

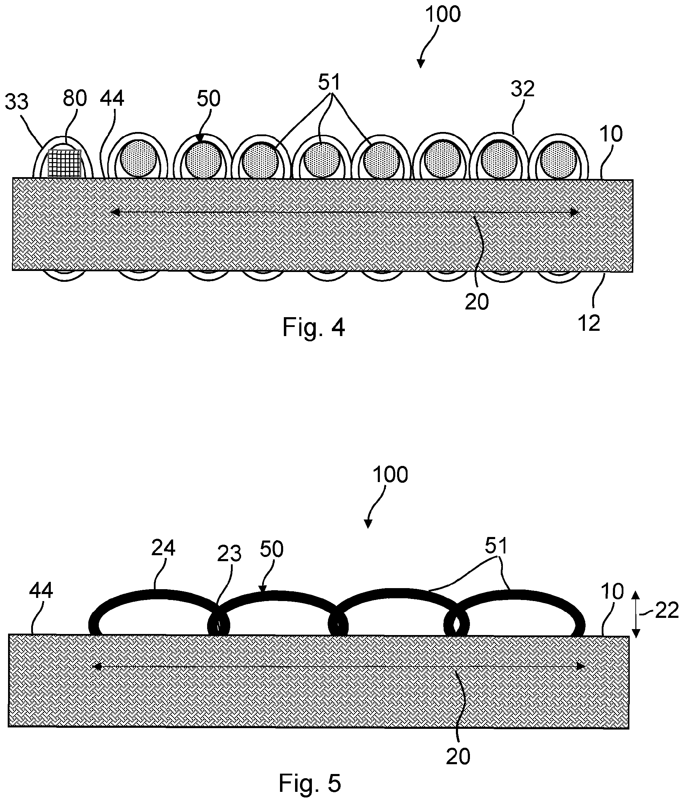

Das Heizelement 50 weist in dem Bereich 20 wenigstens bereichsweise Richtungsumkehr-Strukturen 23 wie Bögen, Wellen und/oder Knicke auf, die sich parallel zu einer Oberfläche 44 des Trägers 10 erstrecken. Die Richtungsumkehr-Strukturen 24 können jedoch auch wenigstens bereichsweise von der Oberfläche 44 des Trägers 10 abstehen, wie bei dem Ausführungsbeispiel in Figur 5 dargestellt ist.

Der Träger 10 kann beispielsweise aus Silikon, vorzugsweise aus 2K-Silikon gebildet sein. Alternativ ist auch möglich, dass der Träger 10 aus einem gewebten Material gebildet ist.

Das wenigstens eine Heizelement 50 kann als Widerstandsheizung ausgebildet sein. Dazu werden bevorzugt Heizdrähte 51 mit einem relativ hohen Widerstand verwendet, welche mit Gleichstrom oder Wechselstrom beaufschlagt werden.

Alternativ ist jedoch auch möglich, dass das Heizelement 50 als Induktionsheizung ausgebildet ist. In diesem Fall werden Heizdrähte 51 mit einem möglichst geringen Widerstand verwendet, welche in Form einzelner Spulen mit gleichem Wicklungssinn angeordnet sind und welche mit Wechselstrom beaufschlagt werden. Das dabei erzeugte Magnetfeld kann in einem in der Nähe befindlichen, elektrisch leitenden wärmeerzeugenden Element wie einer metallischen Schicht Wirbelströme induzieren, welche durch ihre elektromagnetischen Verluste eine Aufheizung des wärmeerzeugenden Elements bewirken. Diese erzeugte Wärme kann dann auf eine Werkstück wie ein Laminat weitergeleitet werden.

Der Heizdraht 51 des Heizelements 50 kann aus einer Litze gebildet sein. Eine solche Litze weist eine hohe Flexibilität auf und kann einfach mit Richtungsänderungen wie Bögen auf dem Träger 10 angeordnet werden.

Das Trägermaterial 10 kann eine Shore-Härte von 5 bis 60 Shore, insbesondere von 10 bis 40 Shore, bevorzugt von 20 bis 30 Shore, aufweisen. Ein Weiterreißwiderstand kann von 4 bis 100 N/mm, insbesondere von 15 bis 100 N/mm, besonders bevorzugt von 25 bis 100 N/mm betragen. Der Träger 10 kann weiter in wenigstens einer Richtung eine Reißdehnung von mindestens 50%, bevorzugt eine Reißdehnung von 100% bis 800%, besonders bevorzugt von 200% bis 800%, und ganz besonders bevorzugt von 500% bis 800% aufweisen.

In Figur 2 ist ein Schnitt durch eine Heizmatte 100 mit einem auf einem Träger 10 angeordneten Heizelement 50 nach einem weiteren Ausführungsbeispiel der Erfindung dargestellt, bei dem das Heizelement 50 mit einer flexiblen Masse 16 abgedeckt ist. Diese flexible Masse kann beispielsweise Silikon sein, das in einem Gießprozess über das auf dem Träger 10 angeordnete Heizelement 50 gegossen wird. Auf diese Weise ist nach Aushärten der flexiblen Masse 16 das Heizelement 50 in die fertige Struktur aus Träger 10 und flexibler Masse 16 fest eingebettet. Die Heizmatte 100 kann so trotzdem die nötige Flexibilität und Dehnbarkeit aufweisen.

In Figur 3 ist ein Schnitt durch eine Heizmatte 100 mit einem auf einem Träger 10 angeordneten Heizelement 50 nach einem weiteren Ausführungsbeispiel der Erfindung dargestellt, bei dem der Träger 10 einen umlaufenden Vakuumkanal 90 aufweist.

Am Rand des Trägers 10 ist wenigstens bereichsweise ein Vakuumkanal 90 angeordnet. Der Vakuumkanal 90 kann zweckmäßig rundumlaufend ausgebildet sein. Wird die Heizmatte 100 an ein Werkstück angelegt und der Vakuumkanal 90 evakuiert, dann wird die Heizmatte 100 an die Oberfläche des Werkstücks angesaugt und nimmt die Form des Werkstücks an. Gleichzeitig wird die Heizmatte 100 in ihrer Position festgehalten. Damit kann der Aufheizvorgang des Werkstücks effizient und zuverlässig durchgeführt werden.

Figur 4 zeigt einen Schnitt durch eine Heizmatte 100 mit einem auf einem Träger 10 angeordneten Heizelement 50 nach einem weiteren Ausführungsbeispiel der Erfindung, bei dem das Heizelement 50 durch Schlaufen 32, beispielsweise in Form einzelner Fäden, gehalten ist.

Insbesondere kann das eine Heizelement 50 aufgestickt sein. Dabei kann das Heizelement 50 beispielweise mit Schlaufen eines Nähfadens aus beispielsweise Polyester oder Aramid oder Polyamid, Glasfaser, auf den Träger aufgestickt sein. Der Stickvorgang kann maschinell erfolgen, wobei das Stickmuster auf einem Computer erstellt wird. Auf diese Weise ist eine sehr kostengünstige Herstellung der Heizmatte möglich.

Der Träger 10 kann wiederum aus Silikon oder alternativ aus einem gewebten Material bestehen. Optional kann in einem Zweikomponenten (2K)-Verfahren Silikon darauf gegossen werden, sodass das Heizelement 50 in einer 2K-Silikonmatte eingebettet ist. Danach können die Fäden, mit denen das Heizelement 50 gehalten wurde, auch wieder entfernt werden, indem sie auf der Außenseite 12 aufgetrennt und abgezogen werden.

Weiter ist bei dem Ausführungsbeispiel in Figur 4 ein Sensorelement 80 auf dem Träger 10 zu erkennen, das ebenfalls mittels Schlaufen 33 eines Nähfadens befestigt ist. Das Sensorelement 80, welches beispielsweise ein Temperatursensor sein kann, kann auf der Oberfläche 44 des Trägers 10 wie das Heizelement 50 eingestickt sein.

Figur 5 zeigt einen Schnitt durch eine Heizmatte 100 mit einem auf einem Träger 10 angeordneten Heizelement 50 nach einem weiteren Ausführungsbeispiel der Erfindung, bei dem das Heizelement 50 in Bögen 24 von der Oberfläche 44 des Trägers 10 absteht. Der Bereich 20, in dem das Heizelement 50 Richtungsumkehr-Strukturen 23 aufweist, erstreckt sich in Figur 5 zum einen parallel zur Oberfläche des Trägers 10. Das Heizelement 50 weist jedoch in diesem Ausführungsbeispiel auch Richtungsumkehr-Strukturen 24 auf, welche von der Oberfläche 44 des Trägers 10 weg weisen, sodass der Bereich 22 senkrecht zur Oberfläche 44 steht.

Die Bögen 24 der Heizdrähte 51 können miteinander verbunden sein. Sie können jedoch auch als nebeneinander angeordnete Bögen 24 verschiedener Heizdrähte 51 ausgebildet sein.

In den Figuren 6 bis 12 sind schematische Draufsichten auf Träger 10 mit verschiedenen Anordnungen, insbesondere Stickmustern, von auf dem Träger befestigten Heizelementen 50, 52, 54, 56, 58 dargestellt.

Figur 6 zeigt ein erstes Ausführungsbeispiel eines Heizelements 50 mit wellenförmig nebeneinander angeordneten Heizdrähten 51. Die einzelnen Heizdrähte 51 weisen jeweils aufeinander folgende Bögen als Richtungsumkehr-Struktur 23 auf. Das Heizelement 50 ist in den geraden aufeinander senkrecht stehenden Bereichen 20, 21 zweidimensional flächig angeordnet. Die Länge 30 eines Drahts 51 ist größer als die Länge des geraden Bereichs 20, sodass bei Dehnung des, nicht eingezeichneten, Trägers 10 das Heizelement 50 über eine gewisse Reserve an Dehnfähigkeit verfügt und so der Dehnung des Trägers 10 flexibel folgen kann, indem das Heizelement 50 bei der Dehnung des Trägers 10 gestreckt wird. Bei einer Dehnung des Trägers 10 in Richtung des Bereichs 21 lässt sich das Heizelement 50 ebenfalls leicht dehnen, da die Heizdrähte 51 dann auseinander gezogen werden. Bei einer Krümmung oder Biegung der Heizmatte 100 kann demzufolge die Dehnungsreserve des Heizelements 50 günstig ausgenutzt werden, um die Heizmatte 100 an eine mehrfach gekrümmte Oberfläche einer Reparaturstruktur oder an ein komplex geformtes Werkzeug anzulegen.

Die einzelnen Heizdrähte 51 können separat mit Strom beaufschlagt sein. Sie können jedoch alternativ auch außerhalb der Bereiche 20, 21 seriell verbunden sein, sodass das Heizelement 50 nur einen einzigen Draht 51 aufweist. Es versteht sich, dass statt eines Drahts 51 auch eine elektrisch leitfähige Faser eingesetzt werden kann.

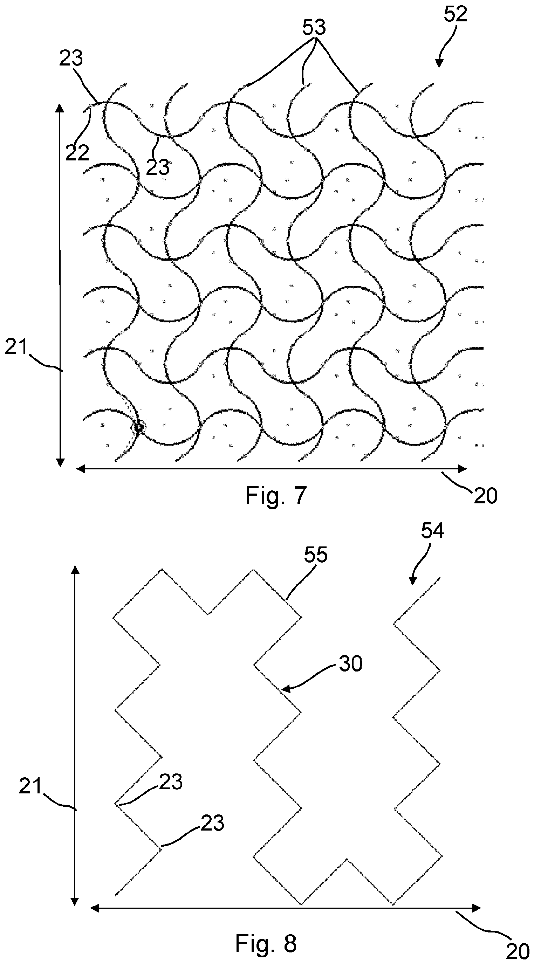

Die zweidimensionale Dehnfähigkeit der Heizelemente 50, 52, 54, 56, 58 bei einer Dehnung des flexiblen flächigen Trägers 10 der Heizmatte 100 in den Bereichen 20, 21 ist auch bei den folgenden, in den Figuren 7 bis 12 dargestellten Ausführungsbeispielen mit verschiedenen Anordnungen von Heizelementen 52, 54, 56, 58 gewährleistet. Jedoch ist bei allen Ausführungsbeispielen von Heizelementen 50, 52, 54, 56, 58 auch eine gewisse Dehnungsreserve in der dritten Dimension des Bereichs 22, wie in Figur 5 dargestellt, gegeben.

Figur 7 zeigt eine schematische Anordnung eines Heizelements 52 nach einem weiteren Ausführungsbeispiel der Erfindung. Bei diesem Ausführungsbeispiel sind zwei Heizelemente 50, wie in Figur 6 dargestellt, um 90° gedreht, übereinander gelegt. Auf diese Weise kann eine erhöhte effektive Stromdichte des Heizelements 52 und damit eine erhöhte Heizleistung gegenüber dem Heizelement 50 erreicht werden. Die einzelnen Heizdrähte 53 können wie bei dem Ausführungsbeispiel in Figur 6 einzeln angesteuert oder auch seriell miteinander verbunden sein.

In Figur 8 ist eine schematische Anordnung eines Heizelements 54 nach einem weiteren Ausführungsbeispiel der Erfindung dargestellt. Hierbei ist ein einzelner Draht 55 mit Richtungsumkehr-Strukturen 23 in Zick-Zack-Anordnung und Schleifen verlegt. Auch mit einer solchen Ausführungsform eines Heizelements 54 lässt sich eine gute Dehnungsreserve des Heizelements 54 bei einer Dehnung des Trägers 10 erreichen. Es versteht sich, dass statt eines Drahts 55 auch eine elektrisch leitfähige Faser eingesetzt werden kann.

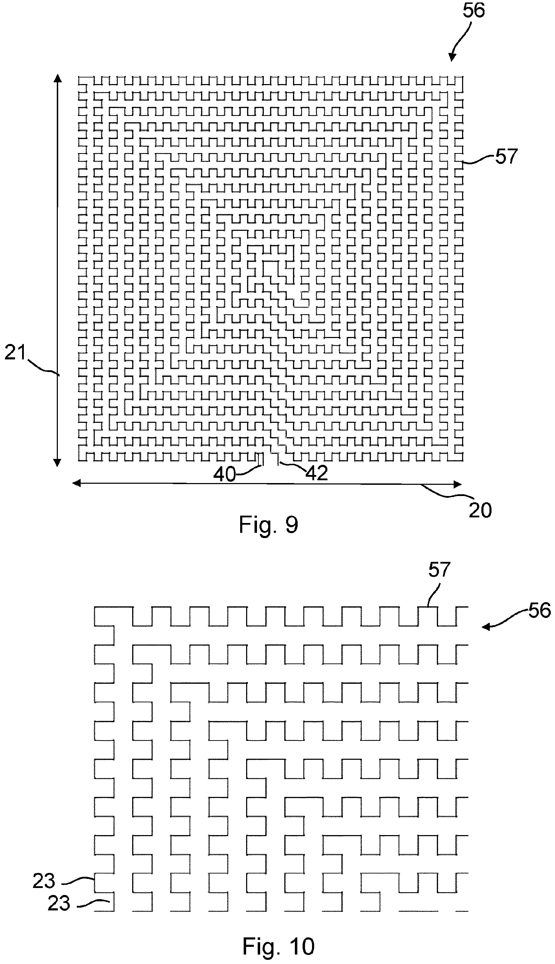

In Figur 9 ist eine schematische Anordnung eines Heizelements 56 nach einem weiteren Ausführungsbeispiel der Erfindung dargestellt, bei dem ein Draht 57 in Form einer Flachspule mit den Anschlüssen 40, 42 verlegt ist. Um eine vorteilhafte Dehnfähigkeit des Heizelements 56 zu erreichen, ist der Draht 57 entlang der geraden Bereiche 20, 21 nicht gerade verlegt, sondern in einer mäanderartigen Richtungsänderungen 23, wodurch sich eine wesentlich größere Länge 30 des Drahts 57 ergibt als der Länge der geraden Bereiche 20, 21 entspricht. Es versteht sich, dass statt eines Drahts 57 auch eine elektrisch leitfähige Faser eingesetzt werden kann.

Figur 10 zeigt dazu eine vergrößerte Darstellung des Heizelements 56 nach Figur 9, bei der die mäanderartigen Richtungsänderungen 23 der Verlegung des Drahts 57 zu erkennen ist.

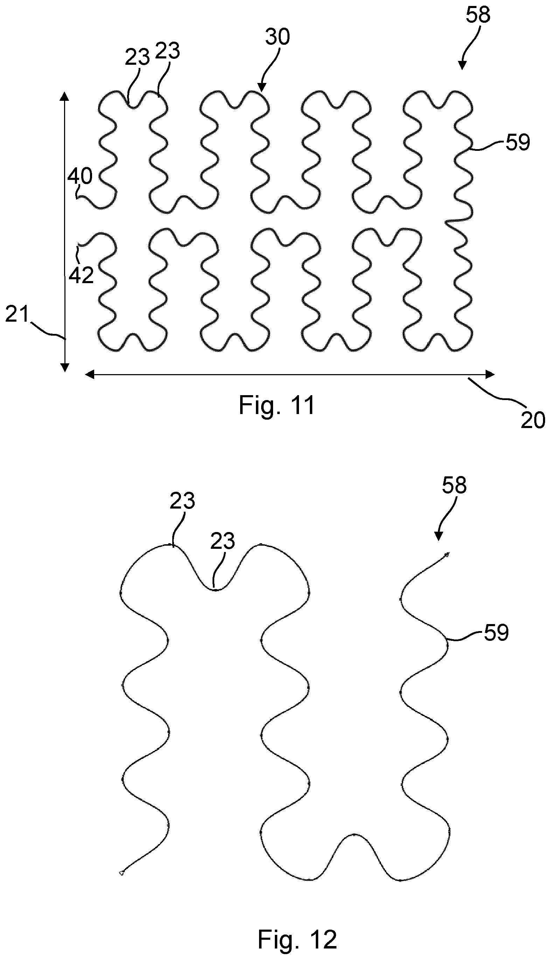

In Figur 11 ist eine schematische Anordnung eines Heizelements 58 nach einem weiteren Ausführungsbeispiel der Erfindung dargestellt. In diesem Ausführungsbeispiel ist ein Draht 59 in Form von zick-zack-förmigen Richtungsänderungen 23 und größer ausgebildeten Schlaufen verlegt. Das Heizelement 58 ist so als eine Drahtschleife mit den beieinander liegenden Anschlüssen 40, 42 ausgebildet. Es versteht sich, dass statt eines Drahts 59 auch eine elektrisch leitfähige Faser eingesetzt werden kann.

Figur 12 zeigt dazu eine vergrößerte Darstellung des Heizelements 58 nach Figur 11, bei dem die Form der zick-zack-förmigen Richtungsänderungen 23 und größer ausgebildeten Schlaufen deutlich zu erkennen ist.

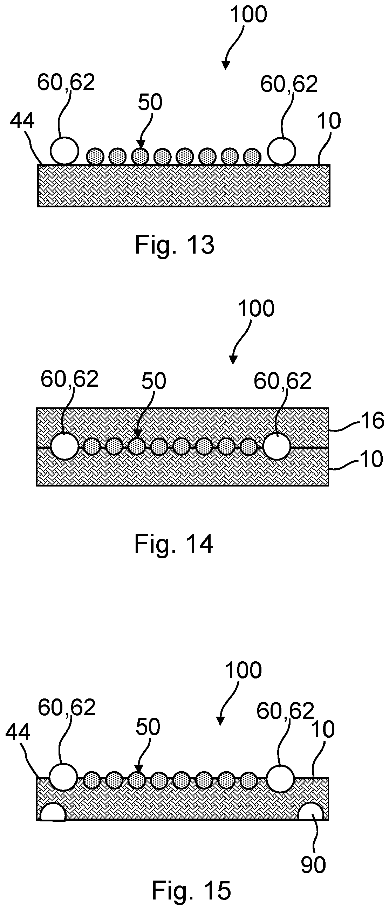

In den Figuren 13, 14 und 15 sind jeweils Ausführungsformen einer Heizmatte 100 dargestellt, welche ein Kühlelement 60 aufweist. Das Kühlelement 60 kann wenigstens eine Kühlleitung 62 aufweisen, welche von einem Fluid, insbesondere Luft, durchströmt ist. In den Figuren sind jeweils zwei Kühlleitungen 62 dargestellt.

Die sonstigen Ausführungen der Heizmatte 100 entsprechen den in den Figuren 1 bis 3 dargestellten Ausführungsformen. Aus Gründen von unnötigen Wiederholungen wird auf die Beschreibung der Figuren 1 bis 3 verwiesen.

Bei dem Ausführungsbeispiel in Figur 13 ist das Kühlelement 60 wie das Heizelement 50 auf der Oberfläche 44 des Trägers 10 angeordnet. Sowohl Heizelement 50 als auch Kühlelement 60 können zweckmäßig auf den Träger 10 aufgestickt sein und dadurch unter Beibehaltung der gewünschten Flexibilität und Dehnbarkeit zuverlässig befestigt. Sowohl Heizelement 50 als auch Kühlelement 60 können so eine genügende Dehnungsreserve gegenüber einer Dehnung des flexiblen Trägers 10 aufweisen.

Figur 14 zeigt einen Schnitt durch eine Heizmatte 100 mit einem auf einem Träger 10 angeordneten Heizelement 50 und einem Kühlelement 60 nach einem weiteren Ausführungsbeispiel der Erfindung, bei dem das Heizelement 50 und das Kühlelement 60 mit einer flexiblen Masse abgedeckt sind. Dadurch sind sowohl Heizelement 50 als auch Kühlelement 60 in der Heizmatte 100 eingebettet und gegen mögliche Beschädigungen durch Einwirkungen von außen geschützt.

Figur 15 zeigt einen Schnitt durch eine Heizmatte 100 mit einem auf einem Träger 10 angeordneten Heizelement 50 und einem Kühlelement 60 nach einem weiteren Ausführungsbeispiel der Erfindung, bei dem der Träger 10 einen umlaufenden Vakuumkanal 90 aufweist. Sowohl Heizelement 50 als auch Kühlelement 60 sind halb in den Träger 10 eingetaucht, wie es mittels Gießen des Trägers 10 von beispielsweise Silikon realisiert werden kann.
- 10: Trägermaterial
- 12: Außenseite
- 16: Masse
- 20: Bereich
- 21: Bereich
- 22: Bereich
- 23: Richtungsumkehr-Struktur
- 24: Richtungsumkehr-Struktur
- 30: Länge Heizelement
- 32: Schlaufe
- 33: Schlaufe
- 40: Anschluss
- 42: Anschluss
- 44: Oberfläche
- 50: Heizelement
- 51: Draht
- 52: Heizelement
- 53: Draht
- 54: Heizelement
- 55: Draht
- 56: Heizelement
- 57: Draht
- 58: Heizelement
- 59: Draht
- 60: Kühlelement
- 62: Kühlleitung
- 80: Sensorelement
- 90: Vakuumkanal
- 100: Heizmatte

## Patentansprüche

1. Heizmatte (100) mit einem flächigen Träger (10) und wenigstens einem Heizelement (50, 52, 54, 56, 58) aus einem drahtförmigen oder faserförmigen Element (51, 53, 55, 57, 59), das mit dem Träger (10) verbunden ist,
wobei der Träger (10) wenigstens einen Bereich (20, 21, 22) mit dem wenigstens einen Heizelement (50, 52, 54, 56, 58) aufweist, in dem das wenigstens eine Heizelement (50, 52, 54, 56, 58) entlang seiner Länge (30) von einem geradlinigen Verlauf abweichende Richtungswechsel auf dem Träger (10) aufweist,
**dadurch gekennzeichnet, dass**
der Träger (10) mit einer Reißdehnung in wenigstens einer Richtung von mindestens 50% reversibel dehnbar ausgebildet ist und
das wenigstens eine Heizelement (50, 52, 54, 56, 58) auf den Träger (10) aufgestickt oder aufgenäht ist,
wobei das wenigstens eine Heizelement (50, 52, 54, 56, 58) auf dem Träger (10) durch Schlaufen (32) gehalten ist oder wenigstens zeitweise durch Schlaufen (32) gehalten ist, insbesondere mit einem Faden aus wenigstens einem von Polyester, Aramid, Polyamid, Glasfaser,
wobei das wenigstens eine Heizelement (50, 52, 54, 56, 58) durch die von einem geradlinigen Verlauf abweichenden Richtungswechsel eine Dehnungsreserve aufweist, so dass seine Länge auf eine gerade Richtung auf dem nicht gedehnten Träger projiziert kleiner ist als seine Gesamtlänge,
wobei das wenigstens eine Heizelement (50, 52, 54, 56, 58) dadurch eine wenigstens zweidimensionale Dehnfähigkeit aufweist und einer Dehnung des Trägers (10) reversibel folgt,
wobei bei einer Krümmung oder Biegung der Heizmatte (100) die Dehnungsreserve des Heizelements (50, 52, 54, 56, 58) ausnutzbar ist, um die Heizmatte (100) an eine mehrfach gekrümmte Oberfläche einer Reparaturstruktur oder an ein komplex geformtes Werkzeug anzulegen.

2. Heizmatte nach Anspruch 1, **dadurch gekennzeichnet, dass** das wenigstens eine Heizelement (50, 52, 54, 56, 58) in dem Bereich (20, 21, 22) wenigstens bereichsweise Richtungsumkehr-Strukturen (23) aufweist, die sich parallel zu einer Oberfläche (44) des Trägers (10) erstrecken und/oder dass wenigstens bereichsweise Richtungsumkehr-Strukturen (24) von der Oberfläche (44) des Trägers (10) abstehen.

3. Heizmatte nach Anspruch 1 oder 2, **dadurch gekennzeichnet, dass** der Träger (10) eine Shore-Härte von 5 bis 60 Shore, insbesondere von 10 bis 40 Shore, bevorzugt von 20 bis 30 Shore, aufweist.

4. Heizmatte nach einem der vorhergehenden Ansprüche, **dadurch gekennzeichnet, dass** der Träger (10) einen Weiterreißwiderstand von 4 bis 100 N/mm, insbesondere von 15 bis 100 N/mm, besonders bevorzugt von 25 bis 100 N/mm aufweist.

5. Heizmatte nach einem der vorhergehenden Ansprüche, **dadurch gekennzeichnet, dass** der Träger (10) in wenigstens einer Richtung eine Reißdehnung im Bereich von 100% bis 800%, bevorzugt im Bereich von 200% bis 800%, besonders bevorzugt im Bereich von 500% bis 800%, aufweist.

6. Heizmatte nach einem der vorhergehenden Ansprüche, **dadurch gekennzeichnet, dass** wenigstens ein Sensorelement (80) auf dem Träger (10) befestigt ist, insbesondere mittels Schlaufen (33) befestigt ist.

7. Heizmatte nach einem der vorhergehenden Ansprüche, **dadurch gekennzeichnet, dass** der Träger (10) aus Silikon, vorzugsweise aus 2K-Silikon, gebildet ist und/oder aus einem gewebten Material gebildet ist.

8. Heizmatte nach einem der vorhergehenden Ansprüche, **dadurch gekennzeichnet, dass** das wenigstens eine Heizelement (50, 52, 54, 56, 58) als Widerstandsheizung ausgebildet ist.

9. Heizmatte nach einem der vorhergehenden Ansprüche, **dadurch gekennzeichnet, dass** das wenigstens eine Heizelement (50, 52, 54, 56, 58) als Induktionsheizung ausgebildet ist.

10. Heizmatte nach einem der vorhergehenden Ansprüche, **dadurch gekennzeichnet, dass** am Rand des Trägers (10) wenigstens bereichsweise ein Vakuumkanal (90) angeordnet ist.

11. Heizmatte nach einem der vorhergehenden Ansprüche, **dadurch gekennzeichnet, dass** das wenigstens eine Heizelement (50, 52, 54, 56, 58) mit einer flexiblen Masse (16) abgedeckt ist.

12. Heizmatte nach einem der vorhergehenden Ansprüche, **dadurch gekennzeichnet, dass** das wenigstens eine Heizelement (50, 52, 54, 56, 58) aus einer Litze gebildet ist.

13. Heizmatte nach einem der vorhergehenden Ansprüche, **dadurch gekennzeichnet, dass** der Träger (10) und/oder die flexible Masse (16) wenigstens ein Kühlelement (60) aufweist.

14. Heizmatte nach Anspruch 13, **dadurch gekennzeichnet, dass** das wenigstens eine Kühlelement (60) wenigstens eine Kühlleitung (62) aufweist, welche von einem Fluid, insbesondere Luft, durchströmt ist.

## Claims

1. Heating mat (100) having a flat carrier (10) and at least one heating element (50, 52, 54, 56, 58) consisting of a wire-shaped or fibre-shaped element (51, 53, 55, 57, 59) which is connected with the carrier (10),
wherein the carrier (10) has at least one region (20, 21, 22) having the at least one heating element (50, 52, 54, 56, 58) in which the at least one heating element (50, 52, 54, 56, 58) has along its length (30) change of direction deviating from a course in a straight line on the carrier (10), **characterised in that**
the carrier (10) is designed so as to be reversibly stretchable with an elongation at break in at least one direction of at least 50% and
the at least one heating element (50, 52, 54, 56, 58) is stitched or sewn onto the carrier (10),
wherein the at least one heating element (50, 52, 54, 56, 58) is held on the carrier (10) by means of loops (32) or is held at least temporarily by means of loops (32), in particular with a thread consisting of at least one of polyester, aramide, polyamide, glass fibre,
wherein the at least one heating element (50, 52, 54, 56, 58) has a stretch reserve by means of the change of direction deviating from a course in a straight line, such that its length projected in a straight line on the non-stretched carrier is less than its total length,
wherein the at least one heating element (50, 52, 54, 56, 58) thus has an at least two-dimensional stretch ability and follows a stretching of the carrier (10) reversibly,
wherein if the heating mat (100) is curved or bent, the stretch reserve of the heating element (50, 52, 54, 56, 58) can be used to apply the heating mat (100) to a surface of a repair structure which is bent in multiple places, or to a complex shaped tool.

2. Heating mat according to claim 1, **characterised in that** the at least one heating element (50, 52, 54, 56, 58) has in the region (20, 21, 22) direction reverse structures (23) in at least some regions which extend parallel to a surface (44) of the carrier (10) and/or that direction reverse structures (24) in at least some regions project from the surface (44) of the carrier (10).

3. Heating mat according to claim 1 or 2, **characterised in that** the carrier (10) has a Shore hardness of 5 to 60 Shore, particularly from 10 to 40 Shore, preferably from 20 to 30 Shore.

4. Heating mat according to any of the preceding claims, **characterised in that** the carrier (10) has a tear propagation resistance of 4 to 100 N/mm, particularly of 15 to 100 N/mm, most preferably of 25 to 100 N/mm.

5. Heating mat according to any of the preceding claims, **characterised in that** the carrier (10) has in at least one direction an elongation at break in the range from 100% to 800%, preferably in the range from 200% to 800%, most preferably in the range from 500% to 800%.

6. Heating mat according to any of the preceding claims, **characterised in that** at least one sensor element (80) is fastened to the carrier (10), in particular is fastened by means of loops (33).

7. Heating mat according to any of the preceding claims, **characterised in that** the carrier (10) is formed from silicone, preferably from 2K silicone, and/or is formed from a woven material.

8. Heating mat according to any of the preceding claims, **characterised in that** the at least one heating element (50, 52, 54, 56, 58) is in the form of a resistance heating device.

9. Heating mat according to any of the preceding claims, **characterised in that** the at least one heating element (50, 52, 54, 56, 58) is in the form of an induction heating device.

10. Heating mat according to any of the preceding claims, **characterised in that** a vacuum channel (90) is arranged in at least some regions at the edge of the carrier (10).

11. Heating mat according to any of the preceding claims, **characterised in that** the at least one heating element (50, 52, 54, 56, 58) is covered with a flexible mass (16).

12. Heating mat according to any of the preceding claims, **characterised in that** the at least one heating element (50, 52, 54, 56, 58) is in the form of a braid.

13. Heating mat according to any of the preceding claims, **characterised in that** the carrier (10) and/or the flexible mass (16) has at least one cooling element (60).

14. Heating mat according to claim 13, **characterised in that** the at least one cooling element (60) has at least one cooling line (62) through which a fluid, in particular air, flows.

## Revendications

1. Tapis chauffant (100) avec un support plat (10) et au moins un élément chauffant (50, 52, 54, 56, 58) constitué d'un élément en forme de fil ou en forme de fibre (51, 53, 55, 57, 59) qui est connecté au support (10),
dans lequel le support (10) présente au moins une zone (20, 21, 22) avec l'au moins un élément chauffant (50, 52, 54, 56, 58), dans lequel l'au moins un élément chauffant (50, 52, 54, 56, 58) présente sur le support (10), le long de sa longueur (30), des changements de direction s'écartant d'un tracé rectiligne, **caractérisé en ce que**
le support (10) est conçu pour être élastique de manière réversible avec un allongement à la rupture dans au moins une direction d'au moins 50 % et
l'au moins un élément chauffant (50, 52, 54, 56, 58) est brodé ou cousu sur le support (10),
dans lequel l'au moins un élément chauffant (50, 52, 54, 56, 58) est maintenu sur le support (10) par des boucles (32) ou est maintenu au moins temporairement par des boucles (32), en particulier avec un fil consistant en au moins un de polyester, aramide, polyamide, fibre de verre,
dans lequel l'au moins un élément chauffant (50, 52, 54, 56, 58) présente une réserve d'allongement due au changement de direction s'écartant d'un tracé rectiligne, de sorte que sa longueur projetée sur une direction droite sur le support non allongé est plus petite que sa longueur totale,
dans lequel l'au moins un élément chauffant (50, 52, 54, 56, 58) présente ainsi au moins une capacité élastique bidimensionnelle et suit de manière réversible un allongement du support (10),
dans lequel la réserve d'allongement de l'élément chauffant (50, 52, 54, 56, 58) peut être utilisée lorsque le tapis chauffant (100) se courbe ou se plie, afin de placer le tapis chauffant (100) sur une surface à plusieurs courbes d'une structure de réparation ou sur un outil de forme complexe.

2. Tapis chauffant selon la revendication 1, **caractérisé en ce que** l'au moins un élément chauffant (50, 52, 54, 56, 58) dans la zone (20, 21, 22) présente des structures d'inversion de direction (23) au moins dans des zones, qui s'étendent parallèlement à une surface (44) du support (10) et/ou **en ce que** des structures d'inversion de direction (24) dépassent au moins par zones de la surface (44) du support (10).

3. Tapis chauffant selon la revendication 1 ou 2, **caractérisé en ce que** le support (10) présente une dureté Shore de 5 à 60 Shore, en particulier de 10 à 40 Shore, de préférence de 20 à 30 Shore.

4. Tapis chauffant selon l'une quelconque des revendications précédentes, **caractérisé en ce que** le support (10) présente une résistance à la propagation de rupture de 4 à 100 N/mm, en particulier de 15 à 100 N/mm, le plus préférentiellement de 25 à 100 N/mm.

5. Tapis chauffant selon l'une quelconque des revendications précédentes, **caractérisé en ce que** le support (10) présente dans au moins une direction un allongement à la rupture dans la plage de 100 % à 800 %, de préférence dans la plage de 200 % à 800 %, le plus préférentiellement dans la plage de 500 % à 800 %.

6. Tapis chauffant selon l'une quelconque des revendications précédentes, **caractérisé en ce qu'**au moins un élément sensible (80) est fixé au support (10), en particulier au moyen de boucles (33).

7. Tapis chauffant selon l'une quelconque des revendications précédentes, **caractérisé en ce que** le support (10) est conçu en silicone, de préférence en silicone 2K, et/ou est conçu en un matériau tissé.

8. Tapis chauffant selon l'une quelconque des revendications précédentes, **caractérisé en ce que** l'au moins un élément chauffant (50, 52, 54, 56, 58) est conçu sous forme de chauffage par résistance.

9. Tapis chauffant selon l'une quelconque des revendications précédentes, **caractérisé en ce que** l'au moins un élément chauffant (50, 52, 54, 56, 58) est conçu sous forme de chauffage par induction.

10. Tapis chauffant selon l'une quelconque des revendications précédentes, **caractérisé en ce qu'**un canal à vide (90) est disposé au moins par zones sur le bord du support (10).

11. Tapis chauffant selon l'une quelconque des revendications précédentes, **caractérisé en ce que** l'au moins un élément chauffant (50, 52, 54, 56, 58) est recouvert d'une masse flexible (16).

12. Tapis chauffant selon l'une quelconque des revendications précédentes, **caractérisé en ce que** l'au moins un élément chauffant (50, 52, 54, 56, 58) est formé d'un toron.

13. Tapis chauffant selon l'une quelconque des revendications précédentes, **caractérisé en ce que** le support (10) et/ou la masse flexible (16) présente au moins un élément de refroidissement (60).

14. Tapis chauffant selon la revendication 13, **caractérisé en ce que** l'au moins un élément de refroidissement (60) présente au moins une conduite de refroidissement (62) à travers laquelle un fluide, en particulier de l'air, circule.
